# EUROPEAN PATENT APPLICATION

(11) **EP 3 291 355 A1**
(43) Date of publication of application: **07.03.2018**
(21) Application number: 17184946.6
(22) Date of filing: 04.08.2017
(51) Int. Cl.: H01M 10/44, H02J 7/00, H01M 10/052

(54) **CHARGING STRATEGY FOR PREVENTING LITHIUM PLATING IN A LITHIUM ION BATTERY**

(30) Priority: 30.08.2016 EP 16186279
(71) Applicant: Robert Bosch GmbH, 70442 Stuttgart (DE); Lithium Energy and Power GmbH & Co. KG, 70469 Stuttgart (DE)
(72) Inventor: Lange, Ulrich, 72631 Aichtal (DE); Ziegler, Joerg, 71277 Rutesheim (DE); Kohn, Peter, 70178 Stuttgart (DE); Nipper, Johannes Maximilian, 71686 Remseck (DE); Poehler, Joerg, 70825 Korntal-Muenchingen (DE); Dufaux, Thomas, 70437 Stuttgart (DE)

(57) **Abstract**

Method (100) for charging a lithium ion battery (60) using a charging process, the charging process comprising
- at least one charging phase (110) and
- at least one homogenization phase (120),
wherein during the charging phase (110) the battery (60) is charged using a constant current, and
during the homogenization phase (120) local inhomogeneous states of charge (150) at different regions (50) of the battery (60) are equilibrated.

## Description

The invention relates to a method according to the independent method claim and a charging device according to the independent apparatus claim.

### State of the art

From DE 10 2013 007 011 A1 a method for charging a lithium-ion-battery is known. A battery management system is used, wherein at least one reference curve is stored that comprises a course of an enlargement of the cell volume and / or the cell thickness at a charging operation, up to which no lithium-plating occurs, dependent on charging current, temperature, state of charge and state of health of the lithium ion battery.

From US 2011 00 37 438 A1 a system is known that charges a battery. During operation, the system obtains a set of charging currents and a set of charging voltages. The system repeats constant-current and constant-voltage charging operations, until a termination condition is reached.

### Disclosure of the invention

The invention of this application is described in the independent method and apparatus claims. Further features and details of the invention result from the dependent claims, the description and the drawings. Thereby, the features and details which are described corresponding to the method according to the invention naturally also apply corresponding to the device according to the invention and vice versa, so that according to the disclosure of the single aspects of the invention, it can always be reciprocally related to.

Preferably, the invention relates to a method for charging a lithium ion battery using a charging process, wherein the charging process comprises at least one "charging phase", in particular a first phase, and at least one "homogenization phase", in particular a second phase. Particularly, during the charging phase, the battery is charged using a constant current, especially by performing a constant current charging as a first charging mode.

It is conceivable that the term "homogenization phase" means that a second phase of the charging process is used, which is characterized in that it differs from the charging phase, as a first phase of the charging process, in particular in that a different charging mode is used. The charging modes can comprise at least one of the following modes: charging by constant voltage, charging by constant current or pausing of charging, for instance by opening the charging circuit, or the like or by using a cycling process with a low difference in the state of charge (SOC). In other words, the difference between the charging phase and the homogenization phase can be that different charging modes are used in each phase.

For instance, in the charging phase an effective charging is reached by a constant current charging of the battery. Further, the homogenization phase can be a phase where a pausing or the like of the aforementioned charging, for example with constant current, is used to effect an equilibration of local inhomogeneous states of charge at different regions of the battery. However, also other charging modes can be used to effect such equilibration or homogenization, e.g. by using a constant voltage charging in the homogenization phase instead of a constant current charging in the charging phase.

Provision may be made during the homogenization phase for local inhomogeneous states of charge at different regions of the battery, particularly inhomogeneous lithiated regions of an anode, to be equilibrated or balanced. For example, the anode may be a graphite anode, particularly with inhomogeneously lithiated regions. In such a case and/or for similar cases with different battery types, an equilibration or homogenization always occurs if a potential difference exists between the different regions of the anode. An identification of transitions in a charging curve can be used so as to identify at least one point of time where the potential difference occurs. In other words, at a certain state of charge of the battery where the transition occurs also a potential difference between different areas of the anode exists, since at these transitions different state of charge of the anode lie on different potentials. Performing the homogenization phase when these transitions occur can effect that the local inhomogeneous states of charge at the different regions of the battery are equilibrated. By identifying state of charge positions of the charging curve where the transitions occur, and by initiating the homogenization phase at these positions, the charging process can be carried out, so that a homogenization of the anode state of charges takes place.

It is conceivable that the charging process and, in particular, the homogenization phase is carried out depending on transitions in the charging curve of the battery, coming from transitions in the charging curve of the anode, particularly for a battery with a graphite anode or a graphite-containing anode. The transitions can, for instance, be identified by an evaluation of a gradient of the charging curve, especially in advance to the charging process. For this, all state of charge positions of the charging curve can be identified where the gradient is higher than at least 110 % or at least 120% or at least 130% or at least 140% or at least 150% of the average gradient of the curve. The charging curve can, for instance, be a charging curve representing a battery or anode voltage over the corresponding state of charge of the battery. The identified positions can, preferably, be permanently stored and/or the charging process can be performed depending on the stored positions, wherein for example a homogenization phase is carried out at the stored positions, in particular when the currently measured state of charge during the charging phase equals the stored positions. Particularly preferably, the stored positions are a predetermined set of values that can be read out during the charging process, for instance from an electronic storage connected to the charging device, wherein preferably the charging device is configured to perform the inventive method.

It may also be provided that, in particular for carrying out the charging process, the charging process and in particular the homogenization phase is carried out depending on and considering, in particular estimated, potential differences of the different regions such that the homogenization phase is carried out only if there is at least one potential difference detected or estimated between at least two of the regions with inhomogeneous states of charge, in particular wherein the homogenization phase is performed by using a second charging mode that is different from the constant current charging in the charging phase. This has the advantage that lithium plating may be prevented, which increases the lifetime of the battery. This can also prevent a rapid decrease of the capacity of the battery. Furthermore, the safety may be increased, because substantially no lithium dendrites can occur. Another advantage of the invention is that the length of the charging time may be reduced.

It is also conceivable that the different phases of the charging process, namely the charging phase and the homogenization phase, are executed depending on the potential differences between the different regions. For instance, the number of executions of the phases, for example single or repeated, or the choice or sequence of the phases depends on the potential differences. In other words, the charging process is carried out depending on the potential differences of the different regions, in particular by carrying out the homogenization phase only if there is at least one significant potential difference detected between at least two of the regions with inhomogeneous states of charge. The point of time when such a significant potential difference occurs is particularly determined by evaluating a charging curve and/or charging parameters and/or measurement values and/or the like.

Therefore, the decision when a potential difference is detected and/or estimated and/or considered as being "significant" can be dependent on a predetermined set of values and/or a manual configuration. The conditions for detecting the presence of a significant potential difference can for instance be preconfigured for the charging process, wherein different configurations can be used for different charging processes, for example for different battery types with different cathode materials and different balancing of anode and cathode capacity. Furthermore, it can be possible that every potential difference that occurs (each can be visible by transitions in a charging curve of a graphite or graphite-containing anode of the battery) is a significant one, or that only some of the potential differences are chosen as a significant one, for instance when a gradient of the transitions exceeds a predetermined value, e.g. higher than 150 % of the average gradient of the curve. This decision can be done at least partially manually and/or automatically, for instance outside the charging process. That means, the configuration and/or implementation of the charging process can include the predetermination of values, each being used to indicate a significant potential difference. The predetermined values can for instance be used for a comparison with measured values during the charging process in order to detect the significant potential differences.

For instance, the significant potential difference is detected and/or the homogenization phase is initiated when at least one of the following conditions is fulfilled:
- at least one specific and/or predetermined state of charge value equals a measured state of charge value of the battery during the charging process,
- at least one specific and/or predetermined charge quantity was applied,
- at least one specific and/or predetermined voltage equals a measured voltage of the battery, in particular a cell voltage.

This allows for carrying out the charging process depending on potential differences in the charging curve of the battery, particularly since these conditions, which can be specific for ranges with a gradient of a voltage over state of charge charging curve, for example of a graphite or graphite-containing anode, since the point of time or position of the charging indicates when a potential difference occurs in the anode. In other words, the homogenization phase can be initiated when at least one of the conditions is fulfilled, which is detected by simple measurements of for instance the state of charge, so that a simultaneous complex measurement and evaluation of the charging curve for identifying the gradients or transitions which indicate the potential differences is not necessary during charging.

For instance, the (significant) potential difference in the charge curve of the battery can be in a range from 40 to 200mV, preferably from 100 to 200mV, very much depending on the average gradient of the charge curve, which is very much dependent on the used cathode material of the battery.

The predetermined conditions may be determined by an at least partially automatic and/or at least partially manual evaluation of a charging curve or the like, for instance by exemplary measurements of the battery in a charging process. The detection of the (significant) potential differences can, for instance, be performed by measuring a parameter, for instance the state of charge or charge quantity or voltage, of the battery and by comparing the measured values with at least one predetermined value, wherein particularly each predetermined value indicates the presence of the significant potential difference. Each value may be predetermined by the evaluation of the charging curve, wherein such state of charge or voltage or charge quantity values of the charging curve can be used as predetermined values, where a specific gradient, for instance more than 110 % or 120 % or 130 % or 140 % or 150 % of the average gradient of the curve, of the curve occurs. Particularly, the predetermined conditions are reconfigured depending on the age of the battery.

For instance, a first predetermined state of charge value, when the homogenization phase is performed and/or that indicates the significant potential difference, is in a range from 15 % to 22 %, in particular 18 %. Furthermore, a second predetermined state of charge value that indicates the significant potential difference is in a range from 50 % to 65 %, in particular 55 %.

Preferably, the battery is configured as a lithium ion battery, particularly with a graphite or graphite-containing anode. The reason for the importance of the potential differences can be that local resistance differences within a cell of the battery may effect an inhomogeneous lithiation of an electrode, for example an anode, of the battery. Such resistance differences may be a result of an inhomogeneous pressure within the battery of a jelly roll or of local aging differences within a cell. As a result, a higher charging current per area flows locally at regions of lower resistance than at regions with higher resistance. At these regions with higher charging current (per area), a higher lithiation of the anode and possibly a lithium plating on graphite can occur, because locally the capacity of the graphite is not sufficient for the intercalation of the lithium.

According to another aspect of the invention, the charging process is carried out depending on the potential differences such that inhomogeneous states of charge of an anode of the battery are equilibrated (balanced). In particular, the equilibration (or equalization) is normally possible when a potential difference exists between different regions of inhomogeneous states of charge of the battery, in particular of an anode of the battery, most preferably of a graphite anode. This in particular effects that for regions of a higher state of charge lithium ions are dissolving and intercalating in the regions with a lower degree of lithiation.

However, it is conceivable that certain conditions and/or constrictions exist under which an equilibration is not feasible, because despite different states of charge there is no potential difference. In particular, such a condition or constriction may be called plateaus (for example voltage plateau or potential plateau or the like) herein after. Accordingly, the different regions of the battery, particular the inhomogeneous lithiated regions of the anode, are regions which are suitable for producing such plateaus. An example for such regions are the regions of a graphite anode. In other words, a voltage plateau may be a range, in which different regions of the anode with different states of charge have a (substantially) equal potential, so that no equilibration can take place. Also, the voltage plateau may particularly indicate a range of states of charge in which at least one of the regions has the same potential or voltage for different states of charge.

Advantageously, the charging process is carried out such that the homogenization phase is carried out when the regions of (with) inhomogeneous states of charge (that means especially inhomogeneous lithiated regions) lie on different voltage plateaus (or voltage levels). In particular, the homogenization phase is performed at the steps of a charging curve, especially of a graphite anode, wherein in particular these steps (transitions) lie between the plateaus (both may be visible in the charging curve).

Preferably, the inventive method comprises at least one of the following steps, which in particular may be performed sequentially or in any order:
a) Carrying out the charging phase after starting the charging process,
b) Obtaining at least one measurement value that depends on an anode voltage of an anode of the battery, particularly a graphite anode, and/or that depends on a battery voltage of at least one battery cell of the battery, particularly wherein the measurement value is a state of charge or charge quantity of the battery,
c) Comparing the at least one measurement value with at least one predetermined value in order to determine a comparison result, particularly such that the comparison result is specific for the (significant) potential difference, which is for example reached by predetermining the values depending on an anode charging curve and/or depending on an initial evaluation of the battery characteristics so that the predetermined values indicate state of charge of the battery where potential differences occur,
d) Stopping the charging phase and carrying out the homogenization phase depending on the comparison result,
e) Resuming the charging phase after a homogenization period of time,
f) Finishing the charging process.

In particular, the steps of the inventive method can be executed in the alphabetical order, in particular a) to b), a) to c), a) to d), a) to e) or a) to f) or in a different order. Further, single or all steps of the method can be repeated in particular.

Preferably, it may be provided that the steps b) to e) are repeated until a stopping condition is reached and the charging process is finished, in particular until a (particularly cell) voltage reaches an end-of-charge-voltage. Alternatively, the steps a) to f) or b) to e) are executed without repetition until the stopping condition and the charging process is finished. The end-of-charge-voltage may be determined by using a measurement apparatus. This has the advantage, that a sufficient charging of the battery is achieved.

It may be provided that the presence of (significant) potential differences between the regions is estimated by evaluating a charging curve of the battery, particularly of an anode and/or of a battery cell, wherein the charging curve is specific for a plurality of voltage plateaus with a substantially constant voltage, and the charging process is carried out such that the at least one homogenization phase is provided for transitions between different voltage plateaus. Furthermore, it may be possible that the charging curve is specific for a plurality of steps which lie between the voltage plateaus. The transitions may relate to these steps. This has the advantage that the transitions (or steps) or the voltage plateaus may be identified by using the charging curve. The charging curve may be determined by a measurement before or during the charging process.

It may be conceivable that the different regions of the battery are regions of a graphite or graphite-containing anode of the battery. It may further be provided that at least 2 or 4 or 6 or 10 or 50 or 100 or 200 different regions of the (especially one) battery exist.

Furthermore, it can be possible that the homogenization phase initiates an equilibration or balancing of the different states of charge of the different regions of the anode by
- pausing the charging, e.g. by opening the charging circuit, in particular in the voltage region of the steps in the charging curve, and/or
- using a cycling process, particularly with a low ΔSOC (state of charge difference) in the voltage region of the steps in the charging curve, in particular by using a very low current, preferably below C/10 charging current, for charging and subsequently discharging repeatedly such that the equilibration is performed, for instance a minimum of two or four or six repetitions is used, and/or
- charging using a constant voltage, in particular at a voltage of the steps in the charging curve, for example a constant voltage charging, wherein particularly the duration of the homogenization phase depends on the charged battery, for instance the type of battery, and can be determined experimentally.

It is also conceivable that a combination of these alternatives, for example pausing and using a constant voltage for charging, may be used. This has the advantage that an efficient charging can be performed.

Preferably, in the homogenization phase a cycling process is carried out by using a (high) discharging current, for instance with a C-rate of more than 1C, and a (low) charging current, for instance with a C-rate below C/10, lower than the discharging current, wherein in particular the cycling process is carried out for a small state of charge difference, which in particular is lower than 1 % or lower than 0.5 % or lower than 0.2 % or lower than 0.1 % of the fully charged state of the battery. This has the advantage, that lithium plating may be significantly reduced.

Advantageously, the charging process is performed by repeating the charging phase and the homogenization phase until a stopping condition is reached, in particular until a cell voltage of the battery reaches an end-of-charge-voltage, wherein
- in a first charging phase the battery is charged until a voltage of the battery (for example of a battery cell) or a state of charge of the battery (for example of an anode or of a cell of the battery) reaches a first predetermined value,
- in a second charging phase the battery is charged until the voltage of the battery or the state of charge of the battery reaches a second predetermined value,
- in a last charging phase the battery is charged until the stopping condition is reached,
wherein each first and second charging phase is followed by the homogenization phase. It is possible that the predetermined values may be determined by a measurement during the charging process or before the charging process and therefore may be saved (for example permanently or persistently) and/or read out from a data storage during the charging process. This allows an easy way of controlling the charging process.

It may be conceivable that during the charging process each of the at least two regions of (with) inhomogeneous states of charge has a local state of charge that differs from a (global) state of charge of the battery, and particularly these regions have only the at least one significant potential difference among each other at transitions of voltage plateaus, and the presence of the at least one significant potential difference between the regions (and/or the voltage plateaus) is detected by performing at least one of the following steps, which in particular may be performed sequentially or in any order:
- obtaining at least one first measurement information by measuring a charging curve of the battery, in particular outside or before the charging process starts,
- determining a transition information by identifying transitions between voltage plateaus on basis of the first measurement information and/or a specification or template, particularly wherein each transition indicates that the different regions have the (significant) potential difference,
- obtaining at least one second measurement information by measuring a measurement value depending on a voltage of the battery for different states of charge of the battery, in particular during the charging process,
- comparing the second measurement information with the transition information, particularly such that the homogenization phase is performed if the significant potential difference is able to effect a significant equilibration of the inhomogeneous states of charge of the regions, for instance if the transition has a gradient higher than 150 % of the average gradient of the curve,
wherein in particular the significance of the potential difference is determined by parametrization of the specification, which is particularly done outside or before the charging process by an optimization procedure. This may be advantageous since potential (voltage) differences can be identified fast and effectively and/or with less effort.

Another aspect of the present invention is a charging device, in particular a fast charging device, for fast charging a lithium ion battery using a charging process, wherein the charging process is carried out according to a method according to the invention. Therefore, the device according to the invention can provide all the advantages as discussed in the context of the method according to the invention.

Further advantages, features and details of the invention result from the following description, in which with reference to the drawings embodiments of the invention are described in detail. Thereby, the features described in the claims and in the description can be each single or in every combination be essential for the invention. It is shown in:
- Fig. 1: a schematic representation of parts of the battery
- Fig. 2: another schematic representation of parts of the battery at different points in time
- Fig. 3: a schematic visualization of an equilibration
- Fig. 4: a schematic visualization of a charging curve of the anode, in particular a graphite anode,
- Fig. 5: a schematic visualization of a charging curve, in particular of a Lithium-Ion cell, particularly a Lithium-Ion cell with a graphite anode,
- Fig. 6: a schematic visualization of an inventive method
- Fig.7: another schematic visualization of an inventive method

In the different figures same features always correspond to the same reference signs, therefore, generally the features are only described once.

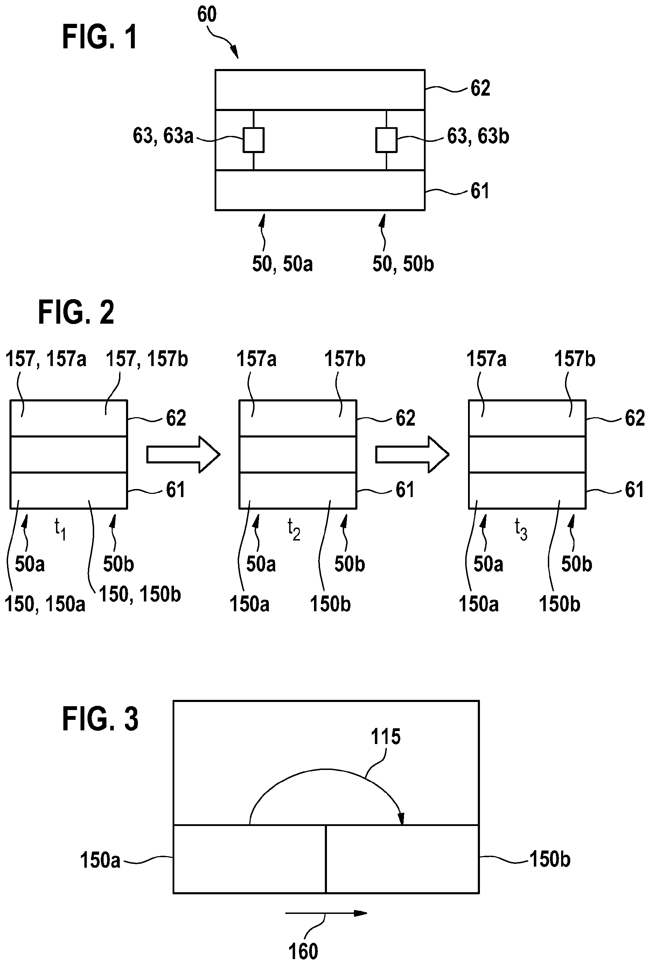

Figure 1 shows at least one part of the battery 60, for example a battery cell. It can be seen that local resistance differences 63 exist between an anode 61, for example a graphite anode, and a cathode 62 of the battery 60. By way of example, only two local resistance differences 63, namely a first local resistance difference 63a and a second local resistance difference 63b, are shown. Of course, further local resistance differences 63 can exist. Additionally, different regions 50 of the battery 60 are presented, namely a first region 50a and a second region 50b.

As can be seen in figure 2, the local resistance difference 63 may lead to local inhomogeneous states of charge 150 of the different regions 50 of the battery 60. In figure 2, for illustrating the underlying effect of the lithium plating, a first state of charge of a first region of the cathode 62 is indicated by the reference no. 157a and the second state of charge of a second region of the cathode 62 is indicated at the reference no. 157b. Beside these states of charge 157 of the cathode 62, also the states of charge 150 at (of) different regions of the anode 61 are indicated. Accordingly, reference no. 150a indicates a first state of charge of the first region 50a of the anode 61 and the reference no. 150b indicates a second state of charge of the second region 50b of the anode 61.

According to the lithium plating process, after a first charging phase 110 (at a first point of time t1) the first state of charge 157a of the first region of the cathode 62 is smaller than the second state of charge 157b of the second region of the cathode 62. For example, the first state of charge 157a amounts to 60 % and the second state of charge 157b amounts to 100 %. Also the first state of charge 150a of the first region 50a of the anode 61 amounts to 60 % and the second state of charge 150b of the second region 50b of the anode 61 amounts to 100 %. After a balancing or equilibration (only of the cathode 62) the first state of charge 157a of the first region of the cathode 62 equals to the second state of charge 157b of the second region of the cathode 62, namely 80 % (by way of example) at a second point of time t2. However, since an equilibration of the anode 61 did not take place (in particular because of a voltage plateau 175), the first state of charge 150a of the anode 61 is still 60 % and the second state of charge 150b of the anode 61 is still 100 %. A reason for the situation that an equilibration of the anode 61 has not occurred is that both regions 50 (that means the first and second region 50a, 50b) of the anode 61 lie on the same voltage plateau 175 and have therefore no potential difference 160. During a further charging phase 110, lithium plating may be effected by these different states of charge 150, especially in the second region 50b and/or the second state of charge 150b of the anode 61 at a third point in time t3.

In order to prevent such a lithium plating, an effecting of an equilibration 115 between the regions of different states of charge 150 of the anode 61 is initiated. According to figure 3, the equilibration 115 can be performed when a potential difference 160 exists between the first region 50a of the first state of charge 150a and the second region 50b of the second state of charge 150b of the anode 61.

Therefore, according to the inventive method, after a charging phase 110 has carried out, a homogenization phase 120 for such an initiation of the equilibration 115 may be used. The homogenization phase 120 may only be used when the equilibration is possible, that means outside of voltage plateaus (when potential difference 160 between the regions 50 exists). In order to coordinate both phases and/or in order to trigger the homogenization phase, a charging curve 170 may be (automatically) evaluated.

The evaluation can for instance be done outside the charging process, for example as an initial configuration of the charging process since the coordination of the phases can depend on the concrete type of battery. Here, transitions 178 can be identified for instance by determining the gradient of a charging curve 170 of an anode. Every or only some of the identified transitions 178 can be selected, for instance depending on the gradient. The occurrence of a transition 178 means that a potential difference 160 between the regions of different states of charge 150 occurs. In other words, each selected transition 178 refers to a selected (that is: significant) potential difference 160. In the range, for instance at the beginning, of the selected transitions 178 values can be obtained from the charging curve 170 which are specific for the (significant) potential difference 160, for example a specific state of charge at the position of the transition 178. Therefore, an evaluation for the configuration of the charging process can be done by using these values as predetermined values, for instance the state of charge of the battery, so that a comparison of these predetermined values with measured values determined during the charging process can be used to detect the point of time where a (significant) potential difference 160 occurs. In other words, when the measured values, for instance state of charge values, during the charging process equal one of the predetermined values, it can be expected that a (significant) potential difference 160 exists.

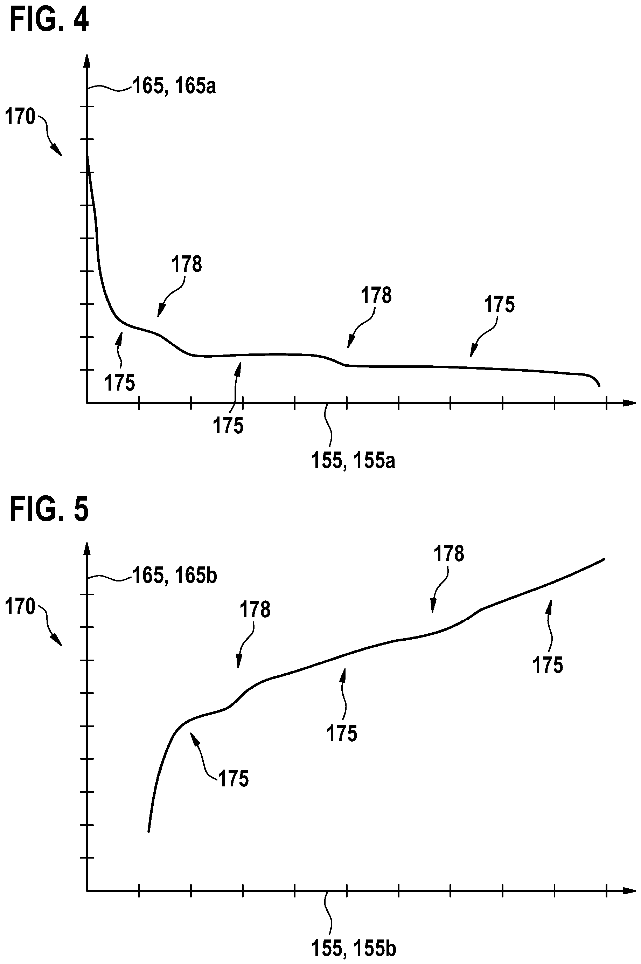

Figure 4 shows a charging curve 170 of a graphite anode by way of example, wherein a voltage 165, especially a voltage 165a of an anode 61 of a battery 60, is shown for different states of charge 155, especially states of charge 155a of the anode 61 of the battery 60. As can be seen, several voltage plateaus 175 exist and several transitions 178 are recognizable there in between.

As can be seen by figure 5, the voltage plateaus 175 and/or the transitions 178 which might be used for the inventive charging process may also be identified in a charging curve 170 for the (whole) cell and/or battery 60 (that is globally and not only for the anode 61), since the cell/battery voltage is the difference between the potential of the cathode and the potential of the anode (U_{cell}=ρ_{cathode}-ρ_{Anode}). Therefore, the charging curve 170 presented in figure 5 shows a voltage 165b of the (whole) battery 60 for different states of charge 155b of the battery 60.

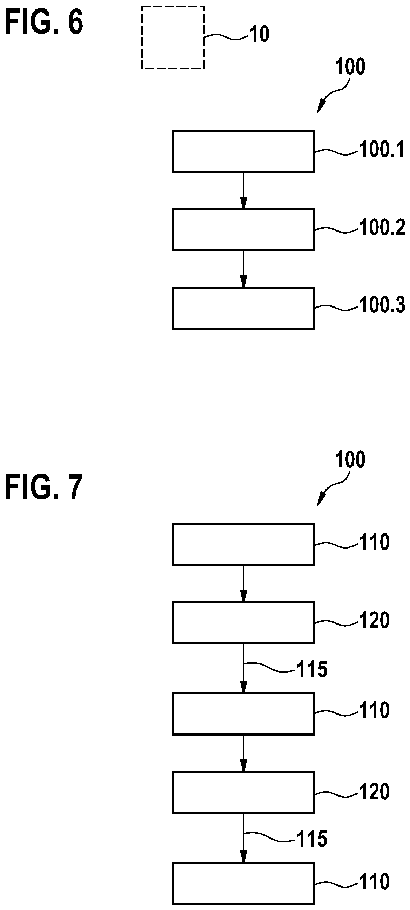

Figure 6 shows the method steps of an inventive method 100. In order to identify significant potential differences 160, for example by identifying voltage plateaus 175 and/or transitions 178 in a charging curve 170, a measurement device of a charging device 10 may be provided. Mainly, the charging device 10 is used for fast charging a lithium ion battery 60 according to the method 100 according to the invention. In a first method step 100.1, for example a first charging phase 110, the battery 60 is charged until a voltage 165 of the battery 60 or a state of charge 155 of the battery 60 reaches a first predetermined value. In a second method step 100.2, for example in a second charging phase 110, the battery 60 is charged until the voltage 165 of the battery 60 or the state of charge 155 of the battery 60 reaches a second predetermined value. In a third method step 100.3, for example in a last charging phase, the battery 60 is charged until the stopping condition is reached. Herein, each first and second charging phase is followed by the homogenization phase 120.

In figure 7, first a charging phase 110 is carried out, in particular depending on potential differences 160 of the different regions 50. For example, this dependence is that the charging phase 110 is stopped and the homogenization phase 120 is started when a predetermined condition is reached. This predetermined condition is for example a defined voltage value at the transitions 178 of the charging curve 170 or a defined amount of charged capacity, wherein this amount should correspond to the positions in the charging curve 170, where the transitions 178 occur. If this charge quantity (or charge amount) is used as criteria it must be adapted to the aging of the battery 60, because the capacity of the battery 60 is reduced over time.

After performing the charging phase 110 and reaching the said condition, at least one homogenization phase 120 is carried out such that an equilibration can take place. Then, further charging phases 110 and/or homogenization phases 120 may be performed until a stopping condition is reached. Each phase may take place for at least 1 minute or at least 10 minutes or at least 1 hour, or up to 20 minutes or up to 1 hour.

The previous description of the embodiments describes the present invention only within the scope of examples. Naturally, also single features of the embodiments as far as technically meaningful can be freely combined with one another without leaving the scope of the present invention.

## Claims

1. Method (100) for charging a lithium ion battery (60) using a charging process, the charging process comprising
- at least one charging phase (110) and
- at least one homogenization phase (120),
wherein during the charging phase (110) the battery (60) is charged using a constant current, and
during the homogenization phase (120) local inhomogeneous states of charge (150) at different regions (50) of the battery (60) are equilibrated,
**characterized in that**
the charging process is carried out depending on potential differences (160) of the different regions (50) such that the homogenization phase (120) is carried out if there is at least one potential difference (160) between at least two of the regions (50) of inhomogeneous states of charge.

2. Method (100) according to claim 1,
**characterized in that**
the method comprises the following steps, which in particular may be performed sequentially or in any order:
a) Carrying out the charging phase (110) after starting the charging process,
b) Obtaining at least one measurement value that depends on an anode voltage (165a) of an anode (61) of the battery (60), particularly a graphite anode (61), and/or that depends on a battery voltage (165b) of at least one battery cell of the battery (60),
c) Comparing the at least one measurement value with at least one predetermined value in order to determine a comparison result such that the comparison result is specific for the potential difference (160),
d) Stopping the charging phase (110) and carrying out the homogenization phase (120) depending on the comparison result,
e) Resuming the charging phase (110) after a homogenization period of time,
f) Finishing the charging process.

3. Method (100) according to claim 2,
**characterized in that**
steps b) to e) are repeated until a stopping condition is reached and the charging process is finished, in particular until a voltage (165) reaches an end-of-charge voltage.

4. Method (100) according to any of the previous claims,
**characterized in that**
the presence of potential differences (160) between the regions (50) is estimated by evaluating a charging curve (170) of the battery (60), particularly of an anode (61) and/or of a battery cell, wherein the charging curve (170) is specific for a plurality of voltage plateaus (175) with a substantially constant voltage, and the charging process is carried out such that the at least one homogenization phase (120) is provided for transitions (178) between different voltage plateaus (175).

5. Method (100) according to any of the previous claims,
**characterized in that**
the different regions (50) of the battery (60) are regions (50) of a graphite anode (61) of the battery (60).

6. Method (100) according to any of the previous claims,
**characterized in that**
the homogenization phase (120) initiates an equilibration (115) of the different states of charge of the different regions (50) by
- pausing the charging, in particular at the transition regions (178), or
- using a cycling process, in particular around the transition regions (178), in particular by charging and subsequently discharging repeatedly such that the equilibration (115) is performed,
- charging using a constant voltage, in particular with a voltage at the transition regions (178),
wherein particularly the duration of the homogenization phase (120) is dependent on the charged battery (60).

7. Method (100) according to any of the previous claims,
**characterized in that**
in the homogenization phase (120) a cycling process is carried out by using a discharging current and a charging current lower than the discharging current, wherein in particular the cycling process is carried out for a small state of charge difference, which is lower than 5 % or lower than 2 % or lower than 1 % or lower than 0.5 % of the fully charged state of the battery (60).

8. Method (100) according to any of the previous claims,
**characterized in that**
the charging process is performed by repeating the charging phase (110) and the homogenization phase (120) until a stopping condition is reached, wherein
- in a first charging phase (110) the battery (60) is charged until a voltage (165) of the battery or a state of charge (155) of the battery (60) reaches a first predetermined value,
- in a second charging phase (110) the battery (60) is charged until the voltage (165) of the battery (60) or the state of charge (155) of the battery (60) reaches a second predetermined value,
- in a last charging phase the battery (60) is charged until the stopping condition is reached,
wherein each first and second charging phase is followed by the homogenization phase (120).

9. Method (100) according to any of the previous claims,
**characterized in that**
during the charging process each of the at least two regions (50) of inhomogeneous states of charge (150) has a local state of charge (150) that differs from a state of charge (155) of the battery (60), and particularly the regions (50) have only the at least one significant potential difference (160) among each other at transitions (178) of voltage plateaus (175), and the presence of the at least one significant potential difference (160) between the regions (50) is detected by performing the following steps:
- obtaining at least one first measurement information by measuring a charging curve of the battery (60),
- determining a transition information by identifying transitions (178) between voltage plateaus (175) on basis of the first measurement information and a specification, wherein each transition (178) indicates that the different regions (50) have the significant potential difference (160),
- obtaining at least one second measurement information by measuring a measurement value depending on a voltage (165) of the battery (60) for different states of charge (155) of the battery (60), in particular during the charging process,
- comparing the second measurement information with the transition (178) information such that the homogenization phase (120) is performed if the potential difference (160) is able to effect a equilibration of the inhomogeneous states of charge of the regions,
wherein in particular the significance of the potential difference (160) is determined by parametrization of the specification, which is particularly done outside the charging process by an optimization procedure.

10. Charging device (10), in particular fast charging device (10), for fast charging a lithium ion battery (60) using a charging process,
**characterized in that**
the charging process is carried out according to a method according to any previous claim.
